# EUROPÄISCHE PATENTSCHRIFT

(11) **EP 1 200 306 B1**
(45) Veröffentlichungstag und Bekanntmachung des Hinweises auf die Patenterteilung: **02.03.2005**
(21) Anmeldenummer: 01919050.3
(22) Anmeldetag: 19.04.2001
(51) Int. Cl.: B64C 25/54, B64C 35/00

(54) **PNEUMATISCHE AERODYNAMISCHE ZUSATZEINRICHTUNG FÜR WASSERFLUGZEUGE**
PNEUMATIC AERODYNAMIC SUPPLEMENTARY DEVICE FOR FLOAT AIRCRAFT
DISPOSITIF COMPLEMENTAIRE AERODYNAMIQUE PNEUMATIQUE POUR HYDRAVIONS

(30) Priorität: 31.05.2000 CH 109400
(43) Veröffentlichungstag der Anmeldung: 02.05.2002
(73) Patentinhaber: Prospective Concepts AG, 8152 Glattbrugg (CH)
(72) Erfinder: TO, Frederick, E., CH-4955 Gondiswil (CH); KAMMER, Res, CH-3113 Rubingen (CH)
(74) Vertreter: Salgo, Reinhold Caspar, Dr.
(86) Internationale Anmeldenummer: PCT/CH2001/000248
(87) Internationale Veröffentlichungsnummer: WO 2001/092104

(56) Entgegenhaltungen:
- FR-A- 825 961
- FR-A- 931 940
- FR-A- 965 785
- US-A- 2 228 860
- US-A- 2 642 238
- US-A- 3 190 587
- US-A- 4 697 762
- US-A- 6 042 052

## Beschreibung

Die vorliegende Erfindung betrifft eine Zusatzeinrichtung für Wasserflugzeuge gemäss dem Oberbegriff von Patentanspruch 1. Für die bei Start und Landung im Wasser liegenden Teile von Flugbooten, Wasserflugzeugen und mit Schwimmern versehenen Landflugzeugen sind hinsichtlich dieser Teile fluiddynamische Kompromisse einzugehen; um jedesmal längere Umschreibungen zu vermeiden, seien diese Teile fortan Schwimmkörper genannt. Die genannten Kompromisse beruhen auf folgenden Ueberlegungen und Forderungen:
- Schwimmkörper sollen dem Flugzeug auf dem Wasser gute Richtungsstabilität erteilen,
- Schwimmkörper sollen vom reinen Auftriebs-Schwimmen leicht in die Gleitphase übergehen können,
- Schwimmkörper sollen möglichst kleinen Luftwiderstand (c_{w}) aufweisen

Technische Vorkehren, die besonders den ersten beiden - hydrodynamischen - Forderungen Rechnung tragen, verschlechtern in aller Regel den c_{w}-Wert, solche, die den c_{w}-Wert verbessern, machen vorwiegend die Schwimm- und Gleitfähigkeit zunichte.

Eine zentrale Rolle spielt hier der Coanda-Effekt (Henri Coanda 1886 - 1972): Wegen des Kontinuitätsgesetzes strömt Wasser um Rundungen eines Körpers herum, hat dabei erhöhte Geschwindigkeit, die über den Satz von Bernoulli einen Druckabfall im Wasser zur Folge hat. Ist also ein Schwimmkörper dynamisch günstig geformt, so wird er durch diesen Druckabfall regelrecht ins Wasser gezogen, mit der Folge, dass eine Gleitphase, sowohl beim Start als auch beim Wassern, weitgehend verunmöglicht wird.

Wird ein Schwimmkörper dagegen mit einer beispielsweise V-förmigen Unterseite versehen, mit einem scharfkantigen Uebergang in vertikale Wände, also mit scharfer Kimmkante, so wird damit sowohl die Richtungsstabilität erhöht, als auch der Coanda-Effekt weitgehend unterdrückt. Dies allerdings zum Preise eines allenfalls um Faktoren erhöhten c_{w}. Der zu schliessende Kompromiss zwischen hydro- und aerodynamischer Maximierung wird also in aller Regel zu Ungunsten der Aerodynamik geschlossen werden müssen.

Besonders in Auge fallend ist hier der Absatz oder die stufenförmige Kante, die der Boden des Schwimmkörpers bei praktisch allen bekannten Ausführungsformen aufweist: Hydrodynamisch notwendig um die Wasserströmung turbulent zu machen und das Einströmen von Luft zu ermöglichen; aerodynamisch verheerend, da ebenfalls einen Strömungsabriss erzeugend, hier allerdings unerwünscht.

Die bisher bekannten Versuche, diesen ungünstigen Kompromiss zu überwinden sind nicht sehr zahlreich:
- Entweder wird die Kante - im Grundriss - nach hinten gerundet
- oder es wurde eine Anordnung von beweglichen Klappen vorgeschlagen, die im Flug ausgefahren werden und dabei die stufenförmige Kante abdecken, um den aerodynamischen Aspekt zu verbessern, dies z.B. in DE 38 41 878 A1.

Eine pneumatische Zusatzeinrichtung gemäß Oberbegriff des Anspruchs 1 ist z.B. aus der US-A- 3190587 oder der FR-A- 931940 bekannt.

Die Aufgabe der vorliegenden Erfindung ist es nun, einen Zusatz zu hydrodynamisch optimierten Schwimmkörpern zu schaffen, der es ermöglicht, den c_{w} solcher Schwimmkörper dann, wenn das Flugzeug sich in der Luft befindet, entscheidend zu verbessern. Eine weitere Aufgabe ist es, einen solchen Zusatz leicht und allfällige Verschleissteile leicht ersetzbar zu gestalten.

Die Lösung der gestellten Aufgabe ist wiedergegeben im kennzeichnenden Teil des Anspruches 1 hinsichtlich der Hauptmerkmale der Erfindung, in den folgenden Ansprüchen hinsichtlich weiterer vorteilhafter Ausbildungen.

In der beigefügten Zeichnung ist der Erfindungsgedanke anhand einiger Ausführungsbeispiele dargestellt. Es zeigen
- Fig. 1a, b, c: drei aus dem Stande der Technik bekannte Querschnittsformen von Schwimmkörpern,
- Fig. 2: Seitenansicht des bekannten Schwimmkörpers von Fig. 1a,
- Fig. 3: ein erstes Ausführungsbeispiel eines erfindungsgemässen Zusatzes mit Bezug auf Fig. 1a, im Querschnitt,
- Fig. 4: ein zweites Ausführungsbeispiel eines erfindungsgemässen Zusatzes mit Bezug auf Fig. 1a, im Querschnitt,
- Fig. 5: ein drittes Ausführungsbeispiel eines erfindungsgemässen Zusatzes mit Bezug auf Fig. 1c, im Querschnitt,
- Fig. 6: ein viertes Ausführungsbeispiel eines erfindungsgemässen Zusatzes mit Bezug auf Fig. 1a, im Querschnitt,
- Fig. 7: ein füntes Ausführungsbeispiel eines erfindungsgemässen Zusatzes mit Bezug auf Fig. 2, im Längsschnitt,
- Fig. 8: das Beispiel von Fig. 7 in einer Draufsicht von unten.

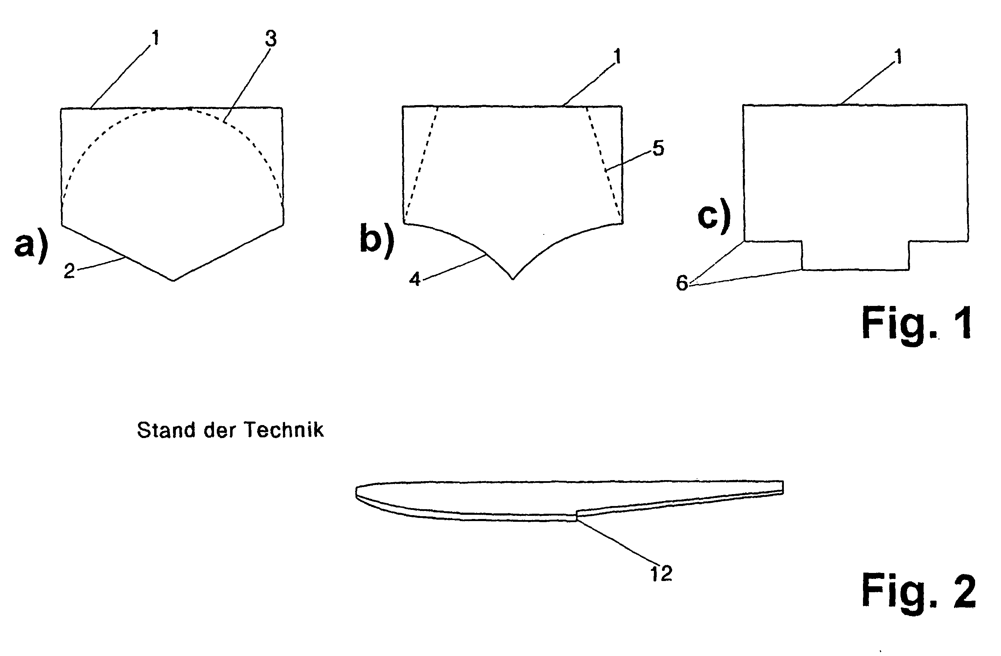

In Fig. 1a,b,c sind drei Schwimmkörper im Querschnitt dargestellt, wie sie als Beispiele aus dem Stand der Technik bekannt sind.

Fig. 1a ist die Darstellung eines häufig verwendeten Profils: Ein im wesentlichen rechteckiger Kasten 1 trägt unten ein umgekehrt dachförmiges Profil 2; der Uebergang in die Vertikale ist scharfkantig ausgebildet, um den Coanda-Effekt zu unterdrücken. Gestrichelt ist ein alternativ zum Kasten 1 verwendetes Rundprofil 3 dargestellt, das die aerodynamischen Eigenschaften verbessert.

Fig. 1b unterscheidet sich von Fig. 1a dadurch, dass das dachförmige Profil 2 als Hohlkehle 4 ausgebildet ist, was hinsichtlich Spritzwasser, Richtungsstabilität und Gleiteigenschaften Verbesserungen bringt, aerodynamisch hingegen klar eine Verschlechterung bedeutet. Wiederum gestrichelt eingetragen ist eine nach oben zusammenlaufende Variante 5 des Kastens 1.

Fig. 1c zeigt das sog. Dornier-Profil, das gute Richtungsstabilität und Gleiteigenschaften aufweist und ebenso für Spritzwasser optimiert ist, aerodynamisch jedoch - wegen zweier Kanten 6 auf jeder Seite- als eher ungünstig beurteilt wird.

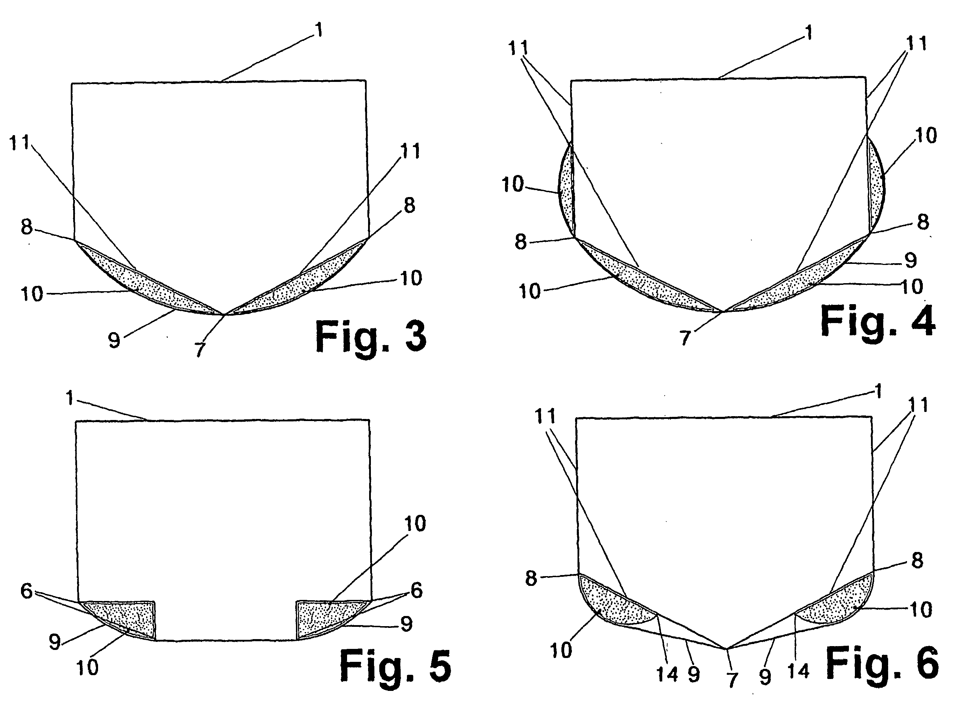

In der Seitenansicht gemäss Fig. 2 ist deutlich eine Kante 12 sichtbar, die unabhängig von der Wahl des Querschnittsprofils gemäss Fig. 1a,b,c immer vorgesehen wird. Die Aufgabe der Kante 12 ist, wie bereits angedeutet, einen Strömungsabriss im Wasser zu bewirken, damit das Flugzeug überhaupt aus dem Wasser abheben kann. In der Luft bewirkt sie jedoch ebenfalls einen Strömungsabriss, was sich in einem stark erhöhten Luftwiderstandsbeiwert c_{w} äussert. Je nachdem, ob es sich beim betrachteten Schwimmkörper um den Rumpf eines Flugbootes oder die Schwimmer eines Wasserflugzeuges handelt, kann die Erhöhung des c_{w} 20% bis ein Vielfaches jenes des betrachteten Schwimmkörpers ausmachen. Anhand mehrerer Ausführungsbeispiele wird - unterstützt durch die Fig. 3 bis 8 - der Erfindungsgedanke näher erläutert: Die Schwimmkörper sind heute nahezu ausnahmslos aus harten Materialien, wie Metall oder/und Kunststoffen gefertigt. Es ist daher grundsätzlich die Erfindung, einen allenfalls nachträglich anzubringenden Zusatz zu schaffen, der aus pneumatischen Elementen besteht, deren Form durch Anwendung von Druckluft zu verändern und durch Materialwahl und Zuschnitt vorbestimmbar ist.

Fig. 3 zeigt im Querschnitt einen solchen erfindungsgemässen Zusatz, wie er an einem Schwimmkörper gemäss Fig. 1a anzubringen ist. Das dachförmige Profil 2 weist zwei Flächen 11 und drei Kanten 7, 8 auf: eine Kielkante 7 und zwei Seitenkanten 8. Das dachförmige Profil 2 ist überzogen mit einer dehnbaren und wasserdicht beschichteten textilen Haut 9, die im Bereich der Kanten 7, 8 am Schwimmkörper befestigt ist. Zwischen den Flächen 11 des Profils 2 und der textilen Haut 9 sind längs zum Schwimmkörper verlaufende flexible Blasen 10 eingelegt, welche - über hier nicht dargestellte Ventile - mit Druckluft beaufschlagt werden können. Der Boden des Schwimmkörpers nimmt dann bogenförmige Gestalt an, vorzugsweise eine solche, bei der die Oberflächen-Übergänge vom Boden zu den Wänden des Kastens 1 glatt verlaufen und auch der Uebergang von der Rundung der einen Blase 10 zur anderen ebenfalls glatt verläuft. Mindestens werden jedoch die Seitenkanten 8 sowohl in ihrer Geometrie, als auch in ihrer aerodynamischen Wirkung abgeschwächt. Dies wird dadurch bewirkt , dass das flexible Material, aus welchem die Blasen 10 bestehen, ein im Wesentlichen inelastisches luftdicht beschichtetes textiles Material ist, und daß das Mass der Rundung im Zusammenwirken zwischen dem in den Blasen 10 herrschenden Luftdruck einerseits und den aus der Elastizität der Haut 9 stammenden Spannungen richtig eingestellt werden. Dies hat den Vorteil, dass die gewünschte Form ab einem bestimmten Luftdruck an erreicht ist; bei weiterer Steigerung ändert sich die Form der Blase 10 kaum mehr, unter der Voraussetzung, dass die Blase 10 mit den Flächen 11 des Profils 2 zumindest im Bereich der Kanten 7, 8 über die ganze Länge der Blasen 10 beispielsweise verklebt ist. Andere Arten der linienförmigen oder flächigen Verbindung sind selbstverständlich ebenfalls im Erfindungsgedanken eingeschlossen.

In Fig. 4 ist eine weitere Ausbildung des Erfindungsgedankens dargestellt. Hier weist der Schwimmkörper vier über mindestens einen wesentlichen Anteil seiner Länge verlaufende Blasen 10 auf. Der Aufbau, das Material und die Befestigung der Blasen 10 entspricht dem über die Blasen 10 von Fig. 3 Gesagten. Die bezüglich Fig. 3 zusätzlichen Blasen 10 liegen auf den, ebenfalls mit der Ziffer 11 belegten, Seitenflächen 11 auf. Durch den Einsatz von vier Blasen können glatte Oberflächen-Uebergänge über die Kanten 7, 8 erzeugt werden bei kleinerer Deformation der elastischen Haut 9.

Wird ein Schwimmkörper gemäss der in Fig. 1b dargestellten Variante 5 des Kastens 1 verwendet, bei dem die Seitenflächen 11 nach oben einspringen und die Flächen 17 als Hohlkehlen 4 ausgebildet sind, so ist das Ausführungsbeispiel gemäss Fig. 4 bevorzugt.

Fig. 5 ist die Darstellung eines Ausführungsbeispiels des Erfindungsgedankens bei einem Dornier-Profil gemäss Fig. 1c.

Auch hier können zwei Blasen 10 vorgesehen werden, wie dargestellt, oder auch deren vier gemäss Fig. 4. Wesentlich sind die glatten Uebergänge der Haut 9 über die hier mit der Ziffer 6 belegten Kanten, oder - wie bereits gesagt - mindestens deren Abschwächung.

Fig. 6 ist die Darstellung eines vierten Ausführungsbeispiels des Erfindungsgedankens, hier beispielsweise gezeigt an einem Querschnittsprofil gemäss Fig. 1a. Die hier eingesetzten längs verlaufenden Blasen 10 bedecken die beiden Seitenflächen 11 nur teilweise: Je von der Seitenkante 8 bis zu einer (hier als Punkt erscheinenden) Längslinie 14. In diesem Bereich sind die Blasen 10 mit den Seitenflächen 11 entweder vollflächig oder aber linienförmig beispielsweise verklebt.

Die ganze Unterseite des hier im Querschnitt dargestellten Schwimmers ist mit der elastischen textilen Haut 9 überspannt. Im druckluftbeaufschlagten Zustande der beiden Blasen 10 berührt die Haut 9 den Schwimmer nur noch in den Bereichen der Kielkante 7 und der Seitenkanten 8, wo sie auch befestigt ist. Dadurch ist es mit diesem Ausführungsbeispiel möglich, die Seitenkanten 8 durch einen glatten Uebergang zu ersetzen.

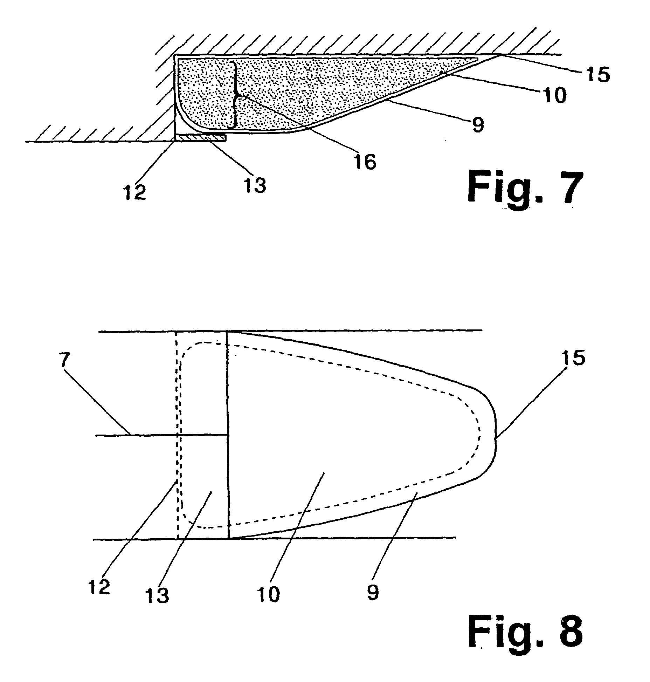

Fig. 7 ist eine Detaildarstellung der querverlaufenden Kante 12 gemäss Fig. 2. Diese Kante 12, gefolgt nach hinten durch einen Absatz 16, ist hydrodynamisch notwendig, weil die Wasserströmung hier abreisst und ein Gleiten des Schwimmkörpers - sowohl in der Start- als auch in der Landephase - überhaupt ermöglicht. Aerodynamisch, also sobald sich das Flugzeug in der Luft befindet, ist die Kante 12, wie bereits gesagt, äusserst störend. In Fig. 7 ist daher dargestellt, wie dieser Störeffekt erfindungsgemäss überwunden oder mindestens deutlich gemildert wird: Der erfindungsgemässe Zusatz umfasst daher auch eine dem Querschnittsprofil entsprechende Verlängerung 13 der Kante 12. Im nicht aufgepumpten Zustande der Blase 10 wird diese durch die elastische Haut 9 im Wesentlichen hinter die Verlängerung 13 in den Absatz 16 gedrängt. Selbstverständlich ist auch hier die Blase 10 zumindest längs der Berandung ihrer Auflagefläche auf dem Schwimmkörper mit diesem beispielsweise verklebt. Im druckluftbeaufschlagten Zustande nimmt sie die in Fig. 7 gezeigte Form an, womit wieder ein glatter Uebergang zwischen der Oberfläche des Schwimmkörpers vor der Kante 12 und jener hinter ihr bewirkt wird. Auch der Uebergang von der genannten Oberfläche auf die durch die Blase 10 gespannte Haut 9 ist ein glatter. Dies verhindert einen Strömungsabriss in der den Schwimmkörper umfliessenden Luft.

Die Befestigung der Verlängerung 13 der Kante 12 am Schwimmkörper geschieht vorzugsweise durch Kleben, wozu die Verlängerung entsprechend geformt und vorbereitet ist. Eine solche Verklebung ist hingegen Stand der Technik und braucht daher hier nicht beschrieben zu werden. Je nach Bauform des Schwimmkörpers kann es vorteilhaft sein, anstelle einer Blase 10 deren zwei den Absatz 16 ausfüllende Blasen 10 vorzusehen; beispielsweise bei Verwendung eines Dornier-Profils.

Fig. 8 zeigt eine Draufsicht von unten auf den Gegenstand von Fig. 7 unter Einsatz nur einer Blase 10. Gestrichelt eingetragen ist einerseits die nun von der Verlängerung 13 überragte Kante 12, anderseits die Berandung der Verklebung der Blase 10. Die elastische Haut 9 ist, falls nur der Absatz 16 durch eine Blase 10 mit elastischer Haut 9 gefüllt werden soll, soweit über die Blase 10 hinausgezogen, dass eine sichere Verbindung - beispielsweise durch Kleben - mit der Unterseite des Schwimmkörpers vorgenommen werden kann, und weist dann einen Rand 15 auf. Ist jedoch vorgesehen, auch die erfindungsgemässe Glättung der übrigen Kanten 6, 7, 8 vorzunehmen, überdeckt die elastische Haut 9 vorzugsweise mindestens die ganze Unterseite des Schwimmkörpers

Die Leitungen für die Druckluft sind nicht dargestellt, da an sich bekannt. Vorzugsweise werden sie im Inneren des Schwimmkörpers geführt.

Zur raschen Entlüftung der Blasen 10 können auch VakuumLeitungen zu den Blasen 10 geführt und diese vor der Landung damit ausgepumpt werden. Hiezu können jedoch auch die für die Druckluft verwendeten Leitungen bei an sich bekannten und vorhandenen Ventilen und unter der Voraussetzung des Vorhandenseins einer Vakuumpumpe verwendet werden.

Der erfindungsgemässe Zusatz kann modular gestaltet sein, kann an die gängigsten Typen und Grössen von Schwimmkörpern angepasst werden, kann nur die Glättung der Kante 12 umfassen, jedoch auch die Glättung aller Kanten 6, 7, 8 einbeziehen.

Sein Einsatz ist besonders vorteilhaft bei Schwimmkörpern von Flugzeugen kleiner Leistung wie Leicht- und Ultraleichtflugzeugen, wo der Einfluss der dadurch verbesserten c_{w}-Werte der Schwimmkörper merklich ist.

## Patentansprüche

1. Pneumatische Zusatzeinrichtung für die mit einer quer verlaufenden Kante (12) und einem **dadurch** hinter der Kante (12) entstehenden Absatz (15) versehenen Schwimmkörper von Wasserflugzeugen zur Verringerung des c_{w}-Wertes des Schwimmkörpers in der Luft, **dadurch gekennzeichnet, dass** sie besteht aus
- mindestens einer flexiblen, luftdichten und mit Druckluft beaufschlagbaren Blase (10), gefertigt aus im Wesentlichen inelastischem Material,
- einer elastischen, aus textilem Material gefertigten wasserdicht beschichteten Haut (9),
wobei die Blase (10) oder mehreren Blasen (10) wahlweise am Schwimmkörper so angeordnet und von der Haut (9) so überdeckt sind, dass die Oberflächen-Uebergänge im Bereich von Kanten (6, 7, 8, 12) des Schwimmkörpers, welche in der Luft zu Strömungsabriss führen können, durch Druckluftbeaufschlagung der Blasen (10) geglättet werden können.

2. Pneumatische Zusatzeinrichtung nach Patentanspruch 1, wobei der Schwimmkörper in seinem ins Wasser eintauchenden Teil V-förmigen Profilquerschnitt mit einer Kielkante (7) und zwei Seitenkanten (8) und zwischen den Kanten (7, 8) und an sie anschliessend Flächen (11) aufweist, **dadurch gekennzeichnet, dass** die Blasen (10) längs des Schwimmkörpers verlaufen und mit der elastischen textilen Haut (9) überzogen sind und auf den Flächen (11) aufliegen.

3. Pneumatische Zusatzeinrichtung nach Patentanspruch 2, **dadurch gekennzeichnet, dass** der Schwimmkörper nur auf den zwischen den Kanten (7, 8) liegenden Flächen (11) Blasen (10) aufweist.

4. Pneumatische Zusatzeinrichtung nach Patentanspruch 3, **dadurch gekennzeichnet, dass** die Blasen (10) die ganzen Flächen (11) bedecken.

5. Pneumatische Zusatzeinrichtung nach Patentanspruch 3, **dadurch gekennzeichnet, dass** die Blasen (10) nur jenen Teil der Flächen (11) bedecken, der an die Kanten (8) anschliesst und einer längs der Flächen (11) verlaufenden Linie (14) begrenzt ist

6. Pneumatische Zusatzeinrichtung nach Patentanspruch 2, **dadurch gekennzeichnet, dass** der Schwimmkörper sowohl auf den zwischen den Kanten (7, 8) liegenden, als auch auf den an die Kanten (8) anschliessenden Flächen (11) Blasen (10) aufweist.

7. Pneumatische Zusatzeinrichtung nach Patentanspruch 3, 4, 5 oder 6, **dadurch gekennzeichnet, dass** die Blasen (10) nur vor der quer verlaufenden Kante (12) angeordnet sind.

8. Pneumatische Zusatzeinrichtung nach Patentanspruch 3, 4, 5 oder 6, **dadurch gekennzeichnet, dass** die Blasen (10) sowohl vor als auch hinter der querverlaufenden Kante (12) angeordnet sind.

9. Pneumatische Zusatzeinrichtung nach Patentanspruch 1, für Schwimmkörper mit Dornier-Profilquerschnitt mit vier Kanten (6), **dadurch gekennzeichnet, dass** längs des Schwimmkörpers verlaufende Blasen (10) vorhanden und mit der elastischen textilen Haut (9) überzogen und so angeordnet sind, dass sie je zwischen zwei der seitlich liegenden Kanten (6) zu liegen kommen.

10. Pneumatische Zusatzeinrichtung nach Patentanspruch 9, **dadurch gekennzeichnet, dass** die Blasen (10) nur vor der quer verlaufenden Kante (12) angeordnet sind.

11. Pneumatische Zusatzeinrichtung nach Patentanspruch 9, **dadurch gekennzeichnet, dass** die Blasen (10) sowohl vor als auch hinter der querverlaufenden Kante (12) angeordnet sind.

12. Pneumatische Zusatzeinrichtung nach Patentanspruch 1, **dadurch gekennzeichnet, dass**
- unmittelbar hinter der querverlaufenden Kante (12) mindestens eine Blase (10) vorhanden und mit der elastischen textilen Haut (9) überzogen ist,
- die querverlaufende Kante (12) eine sie überragende Verlängerung (13) aufweist, welche am Vorderteil des Schwimmkörpers befestigt ist,
- die mindestens eine Blase (10) so geformt und dimensioniert ist, dass sie im druckluftbeaufschlagten Zustande den durch die querlaufende Kante (12) entstehenden Absatz (15) auszugleichen vermag.

13. Pneumatische Zusatzeinrichtung nach einem der Patentansprüche 3 bis 11 und 12.

14. Pneumatische Zusatzeinrichtung nach einem der Patentansprüche 1 bis 13, **dadurch gekennzeichnet, dass** die Blasen (10) mit den Flächen des Schwimmkörpers, auf welchen sie aufliegen, teilweise flächig verklebt sind.

15. Pneumatische Zusatzeinrichtung nach einem der Patentansprüche 1 bis 14, **dadurch gekennzeichnet, dass** Druckluftleitungen vorhanden sind und jede Blase (10) an eine solche Druckluftleitung angeschlossen ist.

16. Pneumatische Zusatzeinrichtung nach einem der Patentansprüche 1 bis 15, **dadurch gekennzeichnet, dass** die Blasen (10) evakuierbar eingerichtet sind.

17. Pneumatische Zusatzeinrichtung nach Patentanspruch 16, **dadurch gekennzeichnet, dass** Vakuumleitungen vorhanden sind und jede Blase (10) an eine solche Vakuumleitung angeschlossen ist.

18. Pneumatische Zusatzeinrichtung nach Patentanspruch 15 und 17, **dadurch gekennzeichnet, dass** Ventile mit Steuerung vorhanden sind und die Druck- und Vakuumleitungen ein- und dieselben sind, die durch Steuerung der genannten Ventile ihre Funktion zugewiesen erhalten.

## Claims

1. Pneumatic additional device for the floats, which are provided with an edge (12) running transversely and with a step (15) produced behind the edge (12), of seaplanes and floatplanes in order to reduce the c_{D} coefficient of the float in the air, **characterized in that** said device comprises
- at least one flexible, airtight bladder (10) to which compressed air can be applied, made from an essentially inelastic textile material,
- an elastic skin (9) which is manufactured from textile material and is coated such that it is watertight,
with the bladder (10) or several bladders (10) optionally being arranged on the float and being covered by the skin (9) such that the surface transitions in the region of edges (6, 7, 8, 12) of the float, which can lead to flow separation in the air, can be smoothed by applying compressed air to the bladders (10).

2. Pneumatic additional device according to Patent Claim 1, with the float having a V-shaped profile cross section in its part which enters the water, with a keel edge (7) and two side edges (8) and surfaces (11) between the edges (7, 8) and adjacent to them, **characterized in that** the bladders (10) run along the float, are covered with the elastic textile skin (9) and rest on the surfaces (11).

3. Pneumatic additional device according to Patent Claim 2, **characterized in that** the float has bladders (10) only on the surfaces (11) located between the edges (7, 8).

4. Pneumatic additional device according to Patent Claim 3, **characterized in that** the bladders (10) cover the entire surfaces (11).

5. Pneumatic additional device according to Patent Claim 3, **characterized in that** the bladders (10) cover only that part of the surfaces (11) which is adjacent to the edges (8) and is bounded by a line (14) running along the surfaces (11).

6. Pneumatic additional device according to Patent Claim 2, **characterized in that** the float has bladders (10) both on the surfaces (11) located between the edges (7, 8) and on the surfaces (11) adjacent to the edges (8).

7. Pneumatic additional device according to Patent Claim 3, 4, 5 or 6, **characterized in that** the bladders (10) are arranged only forward of the transversely running edge (12).

8. Pneumatic additional device according to Patent Claim 3, 4, 5 or 6, **characterized in that** the bladders (10) are arranged both forward of and aft of the transversely running edge (12).

9. Pneumatic additional device according to Patent Claim 1, for floats with a Dornier profile cross section with four edges (6), **characterized in that** bladders (10) are provided running along the float, are covered with the elastic textile skin (9) and are arranged such that they are each located between two of the edges (6) located at the side.

10. Pneumatic additional device according to Patent Claim 9, **characterized in that** the bladders (10) are arranged only forward of the transversely running edge (12).

11. Pneumatic additional device according to Patent Claim 9, **characterized in that** the bladders (10) are arranged both forward of and aft of the transversely running edge (12).

12. Pneumatic additional device according to Patent Claim 1,
**characterized in that**
- at least one bladder (10) is provided immediately aft of the transversely running edge (12) and is covered with the elastic textile skin (9),
- the transversely running edge (12) has an extension (13) which projects over it and is attached to the forward part of the float,
- the at least one bladder (10) is shaped and dimensioned such that, in the state when compressed air is applied to it, it can compensate for the step (15) produced by the transversely running edge (12).

13. Pneumatic additional device according to one of Patent Claims 3 to 11 and 12.

14. Pneumatic additional device according to one of Patent Claims 1 to 13, **characterized in that** the bladders (10) are bonded, at least in places, to the surfaces of the float on which they rest.

15. Pneumatic additional device according to one of Patent Claims 1 to 14, **characterized in that** compressed air lines are provided, and each bladder (10) is connected to one such compressed air line.

16. Pneumatic additional device according to one of Patent Claims 1 to 15, **characterized in that** the bladders (10) are designed such that they can be evacuated.

17. Pneumatic additional device according to Patent Claim 16, **characterized in that** vacuum lines are provided, and each bladder (10) is connected to one such vacuum line.

18. Pneumatic additional device according to Patent Claims 15 and 17, **characterized in that** valves with a controller are provided, and the pressure lines and vacuum lines are one and the same and are operated by controlling said valves.

## Revendications

1. Dispositif auxiliaire pneumatique pour des flotteurs d'hydravions pourvus d'une arête transversale (12) et d'un épaulement (15) formé ainsi derrière l'arête (12), afin de réduire la valeur de la résistance à l'air (C_{w}) du flotteur dans l'air, **caractérisé en ce qu'**il est constitué
- d'au moins une bulle (10) flexible, étanche à l'air et sollicitée par de l'air sous pression, fabriquée dans un matériau essentiellement non élastique,
- d'une membrane (9) stratifiée, étanche à l'eau et élastique, fabriquée dans un matériau textile,
dans lequel la bulle (10) ou plusieurs bulles (10) sont facultativement disposées sur le flotteur et recouvertes par la membrane (9) de telle sorte que les transitions des surfaces au niveau des arêtes (6,7,8,12) du flotteur, lesquelles peuvent entraîner dans l'air un décollement des filets d'air, puissent être lissées par la sollicitation de l'air sous pression des bulles (10).

2. Dispositif auxiliaire pneumatique selon la revendication 1, dans lequel le flotteur présente, dans sa partie plongeant dans l'eau de section transversale de profil en forme de V, une arête de quille (7) et deux arêtes latérales (8) et des surfaces (11) entre les arêtes (7,8) et contiguës à celles-ci, **caractérisé en ce que** les bulles (10) s'étendent le long du flotteur et sont recouvertes de la membrane (9) textile élastique et reposent sur les surfaces (11).

3. Dispositif auxiliaire pneumatique selon la revendication 2, **caractérisé en ce que** le flotteur présente des bulles (10) uniquement sur les surfaces (11) situées entre les arêtes (7,8).

4. Dispositif auxiliaire pneumatique selon la revendication 3, **caractérisé en ce que** les bulles (10) couvrent la totalité des surfaces (11).

5. Dispositif auxiliaire pneumatique selon la revendication 3, **caractérisé en ce que** les bulles (10) couvrent seulement ladite partie des surfaces (11), qui est adjacente aux arêtes (8) et est délimitée par une ligne (14) s'étendant le long des surfaces (11).

6. Dispositif auxiliaire pneumatique selon la revendication 2, **caractérisé en ce que** le flotteur présente des bulles (10) aussi bien sur les surfaces (11) situées entre les arêtes (7,8) que sur les surfaces (11) contiguës aux arêtes (8).

7. Dispositif auxiliaire pneumatique selon la revendication 3,4,5 ou 6, **caractérisé en ce que** les bulles (10) sont disposées uniquement devant l'arête transversale (12).

8. Dispositif auxiliaire pneumatique selon la revendication 3,4,5 ou 6, **caractérisé en ce que** les bulles (10) sont disposées aussi bien devant que derrière l'arête transversale (12).

9. Dispositif auxiliaire pneumatique selon la revendication 1, pour des flotteurs à section transversale de profil Dornier à quatre arêtes (6), **caractérisé en ce que** des bulles (10) s'étendant le long du flotteur sont présentes et recouvertes par la membrane (9) textile élastique et disposées de telle sorte qu'elles viennent chacune reposer entre deux des arêtes latérales (6).

10. Dispositif auxiliaire pneumatique selon la revendication 9, **caractérisé en ce que** les bulles (10) sont disposées uniquement devant l'arête transversale (12).

11. Dispositif auxiliaire pneumatique selon la revendication 9, **caractérisé en ce que** les bulles (10) sont disposées aussi bien devant que derrière l'arête transversale (12).

12. Dispositif auxiliaire pneumatique selon la revendication 1, **caractérisé en ce que**
au moins une bulle (10) est présente directement derrière l'arête transversale (12) et est recouverte par la membrane (9) textile élastique,
l'arête transversale (12) présente une extension (13) formant saillie, qui est fixée sur la partie avant du flotteur,
au moins une bulle (10) est formée et dimensionnée de telle sorte que, lorsqu'elle est sollicitée par de l'air sous pression, elle puisse équilibrer l'épaulement (15) formé par l'arête transversale (12).

13. Dispositif auxiliaire pneumatique selon une des revendications 3 à 11 et 12.

14. Dispositif auxiliaire pneumatique selon une des revendications 1 à 13, **caractérisé en ce que** les bulles (10) sont partiellement collés à plat aux surfaces du flotteur, sur lesquelles elles reposent.

15. Dispositif auxiliaire pneumatique selon une des revendications 1 à 14, **caractérisé en ce que** des conduites d'air sous pression sont présentes et chaque bulle (10) est raccordée à une telle conduite d'air sous pression.

16. Dispositif auxiliaire pneumatique selon une des revendications 1 à 15, **caractérisé en ce que** les bulles (10) sont conçues de manière à pouvoir être dégonflées.

17. Dispositif auxiliaire pneumatique selon la revendication 16, **caractérisé en ce que** des conduites à vide sont présentes et chaque bulle (10) est raccordée à une telle conduite à vide.

18. Dispositif auxiliaire pneumatique selon les revendications 15 et 17, **caractérisé en ce que** des soupapes de commande sont présentes et la commande desdites soupapes assigne leurs fonctions aux conduites d'air sous pression et à vide.
